# EUROPÄISCHE PATENTANMELDUNG

(11) **EP 2 287 216 A1**
(43) Veröffentlichungstag der Anmeldung: **23.02.2011**
(21) Anmeldenummer: 09167328.5
(22) Anmeldetag: 06.08.2009
(51) Int. Cl.: C08F 220/00, C08F 222/00

(54) **Wasserlösliches, hydrophob assoziierendes Copolymer**

(71) Anmelder: BASF SE, 67056 Ludwigshafen (DE)
(72) Erfinder: Pfeuffer, Thomas, 97437, Haßfurt (Sylbach) (DE); Reichenbach-Klinke, Roland, 83278, Traunstein (DE); Friedrich, Stefan, 84518, Garching (DE); Guzmann, Marcus, 69242, Mühlhausen (DE)
(74) Vertreter: Wallon, Alexander

(57) **Zusammenfassung**

Wasserlösliches, hydrophob assoziierendes Copolymer, umfassend ein monoethylenisch ungesättigtes, wasserlösliches, oberflächenaktives Monomer (a), sowie ein von Monomer (a) verschiedenes, monoethylenisch ungesättigtes, hydrophiles Monomer (b). Das Copolymer wird in Gegenwart eines nichtpolymerisierbaren Tensids hergestellt und besitzt ausgeprägt verdickende Eigenschaften in wässrigen Systemen.

## Beschreibung

Die vorliegende Erfindung betrifft ein wasserlösliches, hydrophob assoziierendes Copolymer, das in Gegenwart einer nicht-polymerisierbaren oberflächenaktiven Verbindung erhalten wird, Verfahren zu seiner Herstellung und seine Verwendung.

Wasserlösliche und verdickend wirkende Polymere werden in vielen Bereichen der Technik eingesetzt, beispielsweise im Bereich der Kosmetik, in Lebensmitteln, zur Herstellung von Reinigungsmitteln, Druckfarben, Dispersionsfarben, insbesondere aber auch bei der Erdölförderung.

Es sind viele chemisch unterschiedliche Klassen von Polymeren bekannt, welche als Verdicker eingesetzt werden können. Eine wichtige Klasse verdickend wirkender Polymere sind die sogenannten hydrophob assoziierenden Polymere. Hierunter versteht der Fachmann wasserlösliche Polymere, welche seiten- oder endständig hydrophobe Gruppen aufweisen, wie beispielsweise längere Alkylketten. In wässriger Lösung können derartige hydrophobe Gruppen mit sich selbst oder mit anderen hydrophobe Gruppen aufweisenden Stoffen assoziieren. Hierdurch wird ein assoziatives Netzwerk gebildet, durch das das Medium verdickt wird.

Ein wichtiges Anwendungsgebiet dieser hydrophob assoziierende Copolymere findet sich im Bereich der Erdölförderung, insbesondere zur tertiären Erdölförderung (Enhanced Oil Recovery, EOR). Einzelheiten zur Verwendung hydrophob assoziierender Copolymere zur tertiären Erdölförderung sind beispielsweise im Übersichtsartikel von Taylor, K.C. und Nasr-El-Din, H.A. in J. Petr. Sci. Eng. 1998, 19, 265-280 beschrieben.

Zu den Techniken der tertiären Erdölförderung gehört das so genannte " Polymerfluten" . Eine Erdöllagerstätte ist kein unterirdischer " Erdölsee" , sondern das Erdöl ist in winzigen Poren des erdölführenden Gesteins festgehalten. Der Durchmesser der Hohlräume in der Formation beträgt üblicherweise nur wenige Mikrometer. Zum Polymerfluten presst man durch Injektionsbohrungen eine wässrige Lösung eines verdickend wirkenden Polymers in eine Erdöllagerstätte ein. Durch das Einpressen der Polymerlösung wird das Erdöl durch die besagten Hohlräume in der Formation von der Injektionsbohrung ausgehend in Richtung der Produktionsbohrung gedrückt, und das Erdöl wird über die Produktionsbohrung gefördert.
Wichtig für diese Anwendung ist es, dass sich beim Verschieben keine unterschiedlich permeablen Kanäle bilden (sog. "Fingering" ), wodurch die übrigen unterirdischen Bereiche nicht geflutet würden. Zu beachten ist außerdem, dass die wässrige Polymerlösung keinerlei Gelpartikel enthält. Bereits kleine Gelpartikel mit Dimensionen im Mikrometerbereich können nämlich die feinen Poren in der Formation verstopfen und somit die Erdölförderung zum Erliegen bringen. Hydrophob assoziierende Copolymere zur tertiären Erdölförderung sollten daher einen möglichst geringen Anteil an Gelpartikeln aufweisen. Das Ziel besteht somit darin, durch die Polymere eine Erhöhung der Viskosität des Wassers zu erreichen, welche idealerweise der Viskosität der zu fördernden Kohlenwasserstoffe entspricht.

Hydrophob assoziierende, wasserlösliche Copolymere werden häufig durch die sogenannte mizellare Copolymerisation hergestellt. Dabei werden wasserunlösliche Comonomere durch den Zusatz von Tensiden im wässrigen Reaktionsmedium solvatisiert und mit hydrophilen Comonomeren wie beispielsweise Acrylamid zu einem wasserlöslichen, hydrophob assoziierenden Copolymer umgesetzt. So beschreibt bespielsweise Macromol. Chem. Phys. 2001, 202, 1384-1397 die mizellare Copolymerisation der wasserlöslichen Comonomere Acrylamid, AMPS (Acrylamidomethylpropansulfonsäure) und MADOUAT ([2-(Methacryloyloxy)ethyl]-trimethylammoniumchlorid) mit Dihexylacrylamid bzw. N-(4-Ethyl-phenyl)-acrylamid, während Polymer 1998, 39 (5), 1025-1033 die Copolymerisation von Acrylamid mit Dihexylacrylamid und Eur. Polym. J. 2007, 43, 824-834 die Copolymerisation von Acrylamid mit N-Octadecylacrylamid diskutiert. Als Tensid wird in beiden Fällen Natriumdodecylsulfonat (SDS) verwendet. Ein weiteres Beispiel für eine mizellare Copolymerisation liefert J. Colloid Interf. Sci. 2009, 333, 152-163. Hier wird Acrylamid mit einem Polypropylenglykolmethacrylat in Gegenwart von SDS umgesetzt.

Eine weitere Methode zur Herstellung von wasserlöslichen, hydrophob assoziierenden Copolymeren ist die Verwendung von oberflächenaktiven, wasserlöslichen Comonomeren. Diese Comonomere besitzen einen hydrophoben Anteil, der im Copolymer den hydrophob assoziierenden Effekt bewirkt, und einen hydrophilen Anteil, welcher die Wasserlöslichkeit des Comonomeren sicher stellt. Vorteil dieses Verfahrens ist, dass kein zusätzliches Tensid zur Solvatation des hydrophob assoziierenden Monomeren notwendig ist.

Beispiele für die Anwendung dieses Verfahrens sind in EP 705 854 A1, DE 100 37 629 A1 und DE 10 2004 032 304 A1 zu finden. Diese Schriften offenbaren wasserlösliche, hydrophob assoziierende Copolymere und deren Verwendung, beispielsweise im Bereich der Bauchemie. Als hydrophob assoziierende Monomere enthalten die offenbarten Copolymere jeweils Monomere des nachfolgenden Typs: H₂C=C(R^{x})-COO-(-CH₂-CH₂-O-)_{q}-R^{y} oder auch H₂C=C(R^{x})-O-(-CH₂-CH₂-O-)_{q}-R^{y} wobei R^{x} typischerweise für H oder CH₃ und R^{y} für einen größeren Kohlenwasserstoffrest steht, typischerweise für Kohlenwasserstoffreste mit 8 bis 40 Kohlenstoffatomen. In den Schriften genannt sind beispielsweise längere Alkylgruppen oder auch eine Tristyrylphenylgruppe.

Weiterhin diskutiert J. Appl. Polym. Sci. 1999, 74, 211-217 den Einsatz eines kationischen, wasserlöslichen, hydrophob assoziierenden Comonomeren, welches durch Umsetzung von 2-Methacryloyloxyethyl-dimethylamin mit 1-Bromdodecan erhalten wurde.

Nachteil aller bisher beschriebenen und kommerziell verfügbaren hydrophobassoziativen Polymere ist deren nach wie vor sehr hoher Gelanteil, der sich bei der Auflösung bildet und poröse Formationen verstopfen kann, wodurch das gleichmäßige Polymerfluten empfindlich gestört werden würde. Dieses Problem wurde bereits mit Copolymeren gemäß der noch nicht veröffentlichten Europäischen Patentanmeldung EP 09 160 799.4 teilweise gelöst: Die Gelanteile konnten dort zwar merklich reduziert, aber noch nicht ganz vermieden werden.

Aufgabe der vorliegenden Erfindung war es daher, hydrophob assoziierende Copolymere mit geringen oder nicht nachweisbaren Gelanteilen bereitzustellen. Außerdem sollten die Copolymere wirtschaftlicher als bisher hergestellt werden können und deren Wirkung als Verdicker sollte den bisherigen Verbindungen gegenüber zumindest ebenbürtig sein.

Gelöst wurde diese Aufgabe mit einem wasserlöslichen, hydrophob assoziierenden Copolymer, umfassend:
(a) mindestens ein monoethylenisch ungesättigtes, wasserlösliches und oberflächenaktives Monomer (a), sowie
(b) mindestens ein von Monomer (a) verschiedenes, monoethylenisch ungesättigtes, hydrophiles Monomer (b).

Erfindungswesentlich gekennzeichnet ist dieses Copolymer dadurch, dass bei seiner Synthese vor der Initiierung der Polymerisationsreaktion als weitere Komponente (c) mindestens eine weitere, aber nicht-polymerisierbare oberflächenaktive Verbindung zugesetzt wird.

Wie oben bereits erwähnt wurde, wird ein Vorteil der aus dem Stand der Technik bekannten Verfahren darin gesehen, dass sich die hydrophob assoziierenden Copolymere ohne den Zusatz eines Tensids herstellen lassen, da alle verwendeten Comonomere wasserlöslich sind.

Daher war es umso überraschender, dass bei den erfindungsgemäßen Copolymeren durch den Zusatz eines Tensids während der wässrigen Lösungspolymerisation von hydrophilen Monomeren mit einem wasserlöslichen, hydrophob assoziierenden Comonomer eine deutliche Verbesserung der Polymereigenschaften, insbesondere der Verdickungswirkung erreicht und außerdem der Gelanteil gemäß Aufgabenstellung signifikant reduziert werden konnte.

Dieser Effekt lässt sich vermutlich folgendermaßen erklären:
Bei der bekannten Verfahrensweise bildet das oberflächenaktive, hydrophob assoziierende Comonomer in dem wässrigen Reaktionsmedium Mizellen. Bei der Polymerisation führt dies dazu, dass die hydrophob assoziierenden Bereiche blockweise in das Polymer eingebaut werden. Ist nun erfindungsgemäß bei der Herstellung der Copolymere eine zusätzliche oberflächenaktive Verbindung anwesend, bilden sich gemischte Mizellen. Diese gemischten Mizellen enthalten polymerisierbare und nicht polymerisierbare Anteile. Dadurch werden dann die hydrophob assoziierenden Monomere in kürzeren Blöcken eingebaut. Gleichzeitig ist die Anzahl dieser kürzeren Blöcke pro Polymerkette größer.

Somit unterscheidet sich die Polymerkonstitution der erfindungsgemäßen Copolymere von den Copolymeren nach dem Stand der Technik deutlich, wodurch sich auch deren anwendungstechnische Eigenschaften signifikant verbessern.

### Monomer (a)

Das erfindungsgemäße, hydrophob assoziierende Copolymer umfasst mindestens ein monoethylenisch ungesättigtes, wasserlösliches Monomer (a), welches dem erfindungsgemäßen Copolymer hydrophob assoziierende Eigenschaften verleiht und daher im Folgenden als hydrophob assoziierendes Monomer bezeichnet wird.

Erfindungsgemäß handelt es sich bei mindestens einem der monoethylenisch ungesättigten wasserlöslichen Monomere (a) vorzugsweise um ein Monomer der allgemeinen Formeln (I), (II) und/oder (III)

H₂C=C(R¹)-R⁴-O-(-CH₂-CH₂-O-)ₖ-(-CH₂-CH(R³)-O-)_{I}-H (I)

oder

H₂C=C(R¹)-O-(-CH₂-CH₂-O-)ₖ-R² (II)

oder

H₂C=C(R¹)-(C=O)-O-(-CH₂-CH₂-O-)ₖ-R² (III),

wobei die Einheiten -(-CH₂-CH₂-O-)ₖ und -(-CH₂-CH(R³)-O-)_{I} in Blockstruktur in der in Formel (I) dargestellten Reihenfolge angeordnet sind und die Reste und Indices die folgende Bedeutung haben:
- k:: eine Zahl von 6 bis 150,
- I:: eine Zahl von 5 bis 25,
- R¹:: H oder Methyl,
- R²:: ein aliphatischer und/oder aromatischer, geradkettiger oder verzweigter Kohlenwasserstoffrest mit 8 bis 40 Kohlenstoffatomen,
- R³:: unabhängig voneinander ein Kohlenwasserstoffrest mit mindestens 2 Kohlenstoffatomen,
- R⁴:: eine Einfachbindung oder eine zweiwertige, verknüpfende Gruppe, ausgewählt aus der Gruppe von - (CₙH₂ₙ)- [R^{4a}], -O-(C_{n'} H_{2n'})- [R^{4b}] und -C(O)-O-(C_{n''} H_{2n''} )- [R^{4c}], wobei n, n' und n' ' jeweils für eine natürliche Zahl von 1 bis 6 steht.

Bei den Monomeren (a) der Formel (I) ist eine ethylenische Gruppe H₂C=C(R¹)- über eine zweiwertige, verknüpfende Gruppe -R⁴-O- mit einem Polyoxyalkylenrest mit Blockstruktur -(-CH₂-CH₂-O-)ₖ-(-CH₂-CH(R³)-O-)_{I}-H verbunden, wobei die beiden Blöcke -(-CH₂-CH₂-O-)ₖ und -(-CH₂-CH(R³)-O-)_{I} in der in Formel (I) dargestellten Reihenfolge angeordnet sind. Der Polyoxyalkylenrest weist eine terminale OH-Gruppe auf.

In der oben genannten Formel steht R¹ für H oder eine Methylgruppe. R⁴ steht für eine Einfachbindung oder eine zweiwertige, verknüpfende Gruppe, ausgewählt aus der Gruppe von - (CₙH₂ₙ)- [R^{4a}], -O-(C_{n'} H_{2n'} )- [R^{4b}]- und - C(O)-O-(C_{n''} H_{2n' '} )-[R^{4c}]. In den genannten Formeln stehen n, n' und n' ' jeweils für eine natürliche Zahl von 1 bis 6. Mit anderen Worten gesagt handelt es sich bei der verknüpfenden Gruppe um geradkettige oder verzweigte aliphatische Kohlenwasserstoffgruppen mit 1 bis 6 Kohlenwasserstoffatomen, welche entweder direkt, über eine Ethergruppe -O- oder über eine Esterguppe - C(O)-O- mit der ethylenischen Gruppe H₂C=C(R¹)-verknüpft sind. Bevorzugt handelt es sich bei den Gruppen -(CₙH₂ₙ)-, -(C_{n'} H_{2n'} )- und - (C_{n' '} H_{2n' '} )- um lineare aliphatische Kohlenwasserstoffgruppen. Bevorzugt handelt es sich bei R³ um einen Kohlenwasserstoffrest mit mindestens 3 Kohlenstoffatomen.

Bevorzugt handelt es sich bei R¹ um H und bei R⁴ um eine Gruppe ausgewählt aus -CH₂- oder -O-CH₂-CH₂-CH₂-CH₂-.

Bevorzugt handelt es sich bei R^{4a} um eine Gruppe ausgewählt aus -CH₂-, -CH₂-CH₂- und -CH₂-CH₂-CH₂-, besonders bevorzugt ist eine Methylengruppe -CH₂-.

Bevorzugt handelt es sich bei R^{4b} um eine Gruppe ausgewählt aus -O-CH₂-CH₂-, -O-CH₂-CH₂-CH₂- und -O-CH₂-CH₂-CH₂-CH₂-, besonders bevorzugt ist -O-CH₂-CH₂-CH₂-CH₂-.

Bevorzugt handelt es sich bei R^{4c} um eine Gruppe ausgewählt aus -C(O)-O-CH₂-CH₂-, -C(O)O-CH(CH₃)-CH₂-, -C(O)O-CH₂-CH(CH₃)-, -C(O)O-CH₂-CH₂-CH₂-CH₂- und -C(O)O-CH₂-CH₂-CH₂-CH₂-CH₂-CH₂-, besonders bevorzugt sind -C(O)-O-CH₂-CH₂- und -C(O)O-CH₂-CH₂-CH₂-CH₂- und ganz besonders bevorzugt ist -C(O)-O-CH₂-CH₂-.

Besonders bevorzugt handelt es sich bei der Gruppe R⁴ um eine Gruppe R^{4a} oder R^{4b}, besonders bevorzugt um eine Gruppe R^{4b}.

Weiterhin besonders bevorzugt handelt es sich bei R⁴ um eine Gruppe ausgewählt aus -CH₂- oder -O-CH₂-CH₂-CH₂-CH₂-, ganz besonders bevorzugt ist -O-CH₂-CH₂-CH₂-CH₂-.

Die Monomere (I) weisen weiterhin einen Polyoxyalkylenrest auf, der aus den Einheiten -(-CH₂-CH₂-O-)ₖ und -(-CH₂-CH(R³)-O-)_{I} besteht, wobei die Einheiten in Blockstruktur in der in Formel (I) dargestellten Reihenfolge angeordnet sind. Der Übergang zwischen den beiden Blöcken kann abrupt oder auch kontinuierlich erfolgen.

Bei der Anzahl der Alkylenoxideinheiten k handelt es sich um eine Zahl von 6 bis 150, bevorzugt 12 bis 100, besonders bevorzugt 15 bis 80, ganz besonders bevorzugt 20 bis 30 und beispielsweise ca. 22 bis 25. Für den Fachmann auf dem Gebiet der Polyalkylenoxide ist klar, dass es sich bei den genannten Zahlen um Mittelwerte von Verteilungen handelt.

Beim dem zweiten, terminalen Block -(-CH₂-CH(R³)-O-)_{I}- stehen die Reste R³ unabhängig voneinander für Kohlenwasserstoffstoffreste von mindestens 2 Kohlenstoffatomen steht, bevorzugt mindestens 3 und besonders bevorzugt 3 bis 10 Kohlenstoffatomen. Es kann sich hierbei um einen aliphatischen und/oder aromatischen, linearen oder verzweigten Kohlenstoffrest handeln. Bevorzugt handelt es sich um aliphatische Reste.

Beispiele geeigneter Reste R³ umfassen Ethyl, n-Propyl, n-Butyl, n-Pentyl, n-Hexyl, n-Heptyl, n-Octyl, n-Nonyl oder n-Decyl sowie Phenyl. Beispiele bevorzugter Reste umfassen n-Propyl, n-Butyl, n-Pentyl und besonders bevorzugt ist ein n-Propylrest.

Bei dem Block -(-CH₂-CH(R³)-O-)_{I}- handelt es sich also um einen Block, der aus Alkylenoxideinheiten mit mindestens 4 Kohlenstoffatomen, bevorzugt mindestens 5 Kohlenstoffatomen und/oder Glycidylethern mit einer Ethergruppe von mindestens 2, bevorzugt mindestens 3 Kohlenstoffatomen besteht. Bevorzugt als Reste R³ sind die genannten Kohlenwasserstoffreste; bei den Bausteinen des zweiten terminalen Block handelt es sich besonders bevorzugt um mindestens 5 Kohlenstoffatome umfassende Alkylenoxideinheiten, wie Pentenoxideinheiten oder Einheiten höherer Alkylenoxide.

Bei der Anzahl der Alkylenoxideinheiten I handelt es sich um eine Zahl von 5 bis 25, bevorzugt 6 bis 20, besonders bevorzugt 8 bis 18, ganz besonders bevorzugt 10 bis 15 und beispielsweise ca. 12.

Bei den Monomeren der Formel (I) ist also eine terminale, monoethylenische Gruppe mit einer Polyoxyalkylengruppe mit Blockstruktur verknüpft, und zwar zunächst mit einem hydrophilen, Polyethylenoxideinheiten aufweisenden Block und dieser wiederum mit einem zweiten terminalen, hydrophoben Block, welcher mindestens aus Butenoxiddeinheiten, bevorzugt mindestens Pentenoxideinheiten oder Einheiten höherer Alkylenoxide wie beispielsweise Dodecenoxid aufgebaut ist. Der zweite Block weist eine terminale OH-Gruppe auf. Die Endgruppe ist also im Gegensatz zu den hydrophob assoziierenden Monomeren (a) nach Formel (II) und (III) nicht mit einem Kohlenwasserstoffrest zum hydrophoben Assoziierten verethert, sondern der terminale Block -(-CH₂-CH(R³)-O-)_{I} selbst mit den Resten R³ ist für das hydrophobe Assoziieren der unter Verwendung der Monomere (a) hergestellten Copolymere verantwortlich.

Bei den Monomeren (a) nach Formel (II) handelt es sich bevorzugt um Verbindungen der allgemeinen Formel H₂C=CH-O-(-CH₂-CH₂-O-)ₖ-R², wobei k eine Zahl zwischen 10 und 40 und R² ein Tristyrylphenylrest darstellt.

Bei den Monomeren (a) nach Formel (III) steht R¹ bevorzugt für Methyl, k für eine Zahl zwischen 6 und 30 und R² für einen C12-Alkylrest oder einen Tristyrylphenylrest.

Die drei Monomervertreter (I), (II) und (III) können am Aufbau des Copolymers in beliebigen Anteilen beteiligt sein.

Für den Fachmann auf dem Gebiet von Polyalkylenoxid-Blockcopolymeren ist klar, dass der Übergang zwischen den beiden Blöcken je nach der Art der Herstellung abrupt oder auch kontinuierlich erfolgen kann. Bei einem kontinuierlichen Übergang befindet sich zwischen den beiden Blöcken noch eine Übergangzone, welche Monomere beider Blöcke umfasst. Wenn man die Blockgrenze auf die Mitte der Übergangzone festlegt, kann dem entsprechend der erste Block -(-CH₂-CH₂O-)ₖ noch geringe Mengen an Einheiten -CH₂-CH(R³)-O- und der zweite Block -(-CH₂-CH(R³)-O-)_{I}-geringe Mengen an Einheiten -CH₂-CH₂-O- aufweisen, wobei diese Einheiten aber nicht statistisch über den Block verteilt sind, sondern in der genannten Übergangszone angeordnet sind.

Erfindungsgemäß sind die Monomere (a) wasserlöslich. Im Regelfalle sollte die Löslichkeit der Monomere (a) in Wasser bei Raumtemperatur mindestens 10 g/l, bevorzugt mindestens 50 g/l und besonders bevorzugt mindestens 100 g/l betragen.

Die Menge der monoethylenisch ungesättigten, hydrophob assoziierenden Monomere (a) richtet sich nach dem jeweiligen Verwendungszweck des erfindungsgemäßen Copolymers und beträgt im Allgemeinen 0,1 bis 20 Gew.-% bezogen auf die Gesamtmenge aller Monomere im Copolymer. Bevorzugt beträgt die Menge 0,5 bis 15 Gew.-%.

### Hydrophile Monomere (b)

Über die Monomere (a) hinaus umfasst das erfindungsgemäße, hydrophob assoziierende Copolymer mindestens ein davon verschiedenes, monoethylenisch ungesättigtes, hydrophiles Monomer (b). Selbstverständlich können auch Gemische mehrerer verschiedener hydrophiler Monomere (b) eingesetzt werden.

Die hydrophilen Monomere (b) umfassen neben einer ethylenisch ungesättigten Gruppe eine oder mehrere hydrophile Gruppen. Bei den hydrophilen Gruppen handelt es sich insbesondere um funktionelle Gruppen, welche O- und/oder N-Atome umfassen. Sie können darüber hinaus als Heteroatome insbesondere S- und/oder P-Atome umfassen.

Besonders bevorzugt sind die Monomere (b) in beliebigem Verhältnis mit Wasser mischbar, zur Ausführung der Erfindung ist es jedoch ausreichend, dass das erfindungsgemäße, hydrophob assoziierende Copolymer die eingangs erwähnte Wasserlöslichkeit besitzt. Im Regelfalle sollte die Löslichkeit der Monomere (b) in Wasser bei Raumtemperatur mindestens 100 g/l, bevorzugt mindestens 200 g/l und besonders bevorzugt mindestens 500 g/l betragen.

Beispiele geeigneter funktioneller Gruppen umfassen Carbonylgruppen >C=O, Ethergruppen -O-, insbesondere Polyethylenoxidgruppen -(CH₂-CH₂-O-)ₙ-, wobei n bevorzugt für eine Zahl von 1 bis 200 steht, Hydroxygruppen -OH, Estergruppen - C(O)O-, primäre, sekundäre oder tertiäre Aminogruppen, Ammoniumgruppen, Amidgruppen -C(O)-NH-, Carboxamidgruppen
-C(O)-NH₂ oder saure Gruppen wie Carboxylgruppen -COOH, Sulfonsäuregruppen -SO₃H, Phosphonsäuregruppen -PO₃H₂ oder Phosphorsäuregruppen -OP(OH)₃.

Beispiele bevorzugter funktioneller Gruppen umfassen Hydroxygruppen -OH, Carboxylgruppen -COOH, Sulfonsäuregruppen -SO₃H, Carboxamidgruppen -C(O)-NH₂, Amidgruppen -C(O)-NH- sowie Polyethylenoxidgruppen -(CH₂-CH₂-O-)ₙ-H, wobei n bevorzugt für eine Zahl von 1 bis 200 steht.

Die funktionellen Gruppen können direkt an die ethylenische Gruppe angebunden sein, oder aber über eine oder mehrere verknüpfende Kohlenwasserstoffgruppen mit der ethylenischen Gruppe verbunden sein.

Bei den hydrophilen Monomeren (b) handelt es sich bevorzugt um ein saure Gruppen umfassendes Monomer, wobei es sich bei den sauren Gruppen erfindungsgemäß um mindestens eine Gruppe ausgewählt aus der Gruppe von -COOH, -SO₃H und -PO₃H₂ handelt. Bevorzugt sind auch Monomere der allgemeinen Formel H₂C=C(R⁷)R⁸, wobei R⁷ für H oder Methyl und R⁸ für eine hydrophile Gruppe oder eine, eine oder mehrere hydrophile Gruppen umfassende Gruppe steht.

Bei den Gruppen R⁸ handelt es sich um Gruppen, welche Heteroatome in einer solchen Menge umfassen, so dass die eingangs definierte Wasserlöslichkeit erreicht wird.

Beispiele geeigneter Monomere (b) umfassen saure Gruppen umfassende Monomere, beispielsweise -COOH-Gruppen umfassende Monomere wie Acrylsäure oder Methacrylsäure, Crotonsäure, Itaconsäure, Maleinsäure oder Fumarsäure, Sulfonsäuregruppen umfassende Monomere wie Vinylsulfonsäure, Allylsulfonsäure, 3-Allyloxy-2-hydroxypropansulfonsäure, 2-Acrylamido-2-methylpropansulfonsäure (AMPS), 2-Methacrylamido-2-methylpropansulfonsäure, 2-Acrylamidobutansulfonsäure, 3-Acrylamido-3-methyl-butansulfonsäure oder 2-Acrylamido-2,4,4-trimethylpentansulfonsäure oder Phosphonsäuregruppen umfassende Monomere wie Vinylphosphonsäure, Allylphosphonsäure, N-(Meth)acrylamidoalkylphosphonsäuren oder (Meth)acryloyloxyalkylphosphonsäuren.

Zu nennen sind weiterhin Acrylamid und Methacrylamid sowie Derivate davon, wie beispielsweise N-Methyl(meth)acrylamid, N, N' -Dimethyl(meth)acrylamid sowie N-Methylolacrylamid, N-Vinylderivate wie N-Vinylformamid, N-Vinylacetamid, N-Vinylpyrrolidon oder N-Vinylcaprolactam sowie Vinylester, wie Vinylformiat oder Vinylacetat. N-Vinylderivate können nach Polymerisation zu Vinylamin-Einheiten, Vinylester zu Vinylalkohol-Einheiten hydrolysiert werden.

Weitere Beispiele umfassen Hydroxy- und/oder Ethergruppen umfassende Monomere, wie beispielsweise Hydroxyethyl(meth)acrylat, Hydroxypropyl(meth)acrylat, Allylalkohol, Hydroxyvinylethylether, Hydroxyvinylpropylether, Hydroxyvinylbutylether oder Verbindungen der Formel H₂C=C(R¹)-COO-(-CH₂-CH(R⁹)-O-)_{b}-R¹⁰ (IVa) bzw. H₂C=C(R¹)-O-(-CH₂-CH(R⁹)-O-)_{b}-R¹⁰ (IVb) wobei R¹ wie oben definiert ist und b für eine Zahl von 2 bis 200 steht, bevorzugt 2 bis 100 steht. Bei den Resten R⁹ handelt es sich unabhängig voneinander um H, Methyl oder Ethyl, bevorzugt H oder Methyl, mit der Maßgabe, dass es sich bei mindestens 50 mol-% der Reste R⁹ um H handelt. Bevorzugt handelt es sich bei mindestens 75 mol-% der Reste R⁹ um H, besonders bevorzugt bei mindestens 90 mol-% und ganz besonders bevorzugt ausschließlich um H. Bei dem Rest R¹⁰ handelt es sich um H, Methyl oder Ethyl, bevorzugt H oder Methyl. Die einzelnen Alkylenoxideinheiten können statistisch oder blockweise angeordnet werden. Bei einem Blockcopolymer kann der Übergang zwischen den Blöcken abrupt oder graduell sein.

Geeignete hydrophile Monomere (b) sind weiterhin Ammoniumgruppen aufweisende Monomere, insbesondere Ammoniumderivate von N-(ω-Aminoalkyl)(meth)acrylamiden oder ω-Aminoalkyl(meth)acrylestern.

Insbesondere kann es sich bei Ammoniumgruppen aufweisenden Monomeren (b) um Verbindungen der allgemeinen Formeln H₂C=C(R⁷)-CO-NR¹³-R¹¹-NR¹²₃⁺ X- (Va) und/oder H₂C=C(R⁷)-COO-R¹¹-NR¹²₃⁺ X- (Vb) handeln, wobei R⁷ die oben angegebene Bedeutung hat, also für H oder Methyl steht, R¹¹ für eine bevorzugt lineare C₁- bis C₄-Alkylengruppe steht und R¹³ für H oder eine C₁- bis C₄-Alkylgruppe, bevorzugt H oder Methyl. Bei den Resten R¹² handelt es sich unabhängig voneinander um C₁- bis C₄-Alkyl, bevorzugt Methyl oder eine Gruppe der allgemeinen Formel - R¹⁴-SO₃H, wobei R¹⁴ für eine bevorzugt lineare C₁- bis C₄-Alkylengruppe oder eine Phenylgruppe steht, mit der Maßgabe, dass es sich im Regelfalle bei nicht mehr als einem der Substituenten R¹² um einen Sulfonsäuregruppen aufweisenden Substituenten handelt. Besonders bevorzugt handelt es sich bei den drei Substituenten R¹² um Methylgruppen, d.h. das Monomer weist eine Gruppe - N(CH₃)₃⁺ auf. X⁻ steht in obiger Formel für ein einwertiges Anion, beispielsweise Cl⁻. Selbstverständlich kann X- auch für einen entsprechenden Bruchteil eines mehrwertigen Anions stehen, obwohl dies nicht bevorzugt ist. Beispiele geeigneter Monomere (b) der allgemeinen Formel (Va) bzw. (Vb) umfassen Salze von 3-Trimethylammonium-propylacrylamiden oder 2-Trimethylammoniumethyl(meth)acrylaten, beispielsweise die entsprechenden Chloride wie 3-Trimethylammoniumpropylacrylamidchlorid (DIMAPAQUAT) und 2-Trimethylammoniumethylmethacrylatchlorid (MADAME-QUAT).

Beim Monomer (b) kann es sich also auch um ein neutrales Monomer (b1) handeln und hier insbesondere um ein Monomer ausgewählt aus der Gruppe von (Meth)acrylamid, N-Methyl(meth)acrylamid, N,N' -Dimethyl(meth)acrylamid, N-Methylol(meth)acrylamid, N-Vinylformamid oder N-Vinyl-2-pyrrolidon handelt, und bei dem Monomer (b2) um mindestens eines ausgewählt aus der Gruppe von (Meth)acrylsäure, Vinylsulfonsäure, Allylsulfonsäure, 2-Acrylamido-2-methylpropansulfonsäure (AMPS), 2-Methacrylamido-2-methylpropansulfonsäure, 2-Acrylamidobutansulfonsäure, 3-Acrylamido-3-methyl-butansulfonsäure oder 2-Acrylamido-2,4,4-trimethylpentansulfonsäure oder Vinylphosphonsäure. Das Copolymer kann darüber hinaus noch mindestens ein kationisches, Ammoniumgruppen aufweisendes Monomer (b3) umfassen, wobei es sich bei dem kationischen Monomer um Salze von 3-Trimethylammoniumpropyl(meth)acrylamiden und 2-Trimethylammoniumethyl(meth)acrylaten handelt.

Die oben genannten hydrophilen Monomere können selbstverständlich nicht nur in der dargestellten Säure- bzw. Baseform eingesetzt werden, sondern auch in Form entsprechender Salze.

Wie bereits dargelegt, umfasst das erfindungsgemäße Copolymer in einer bevorzugten Ausführungsform der Erfindung mindestens ein saure Gruppen umfassendes Monomer (b). Bevorzugt handelt es sich hierbei um Monomere, welche mindestens eine Gruppe ausgewählt aus der Gruppe von -COOH, -SO₃H oder -PO₃H₂ umfassen, besonders bevorzugt sind COOH-Gruppen und/oder -SO₃H-Gruppen umfassende Monomere.

Bevorzugt handelt es sich bei mindestens einem der Monomere (b) um ein Monomer ausgewählt aus der Gruppe von (Meth)acrylsäure, Vinylsulfonsäure, Allylsulfonsäure oder 2-Acrylamido-2-methylpropansulfonsäure (AMPS), besonders bevorzugt um Acrylsäure und/oder APMS.

Insgesamt sollten die Monomer-Komponente (a) in Mengen von 0,1 bis 20,0 Gew.-%, die Monomer-Komponente (b) in Mengen von 25,0 bis 99,9 Gew.-% und die Komponente (c) in Mengen von 0,1 bis 5,0 Gew.-%, jeweils bezogen auf die Gesamtmenge aller Komponenten im Copolymer, im Polymer enthalten sein. Die genaue Menge richtet sich nach der Art und dem gewünschten Verwendungszweck der hydrophob assoziierenden Copolymere und wird vom Fachmann entsprechend festgelegt.

Generell ist es als bevorzugt anzusehen, wenn es sich beim Copolymer um ein Copolymer (A1) handelt, welches mindestens zwei verschiedene hydrophile Monomere (b) umfasst, und es sich dabei um mindestens
- ein neutrales hydrophiles Monomer (b1), und
- mindestens ein hydrophiles anionisches Monomer (b2) handelt, welches mindestens eine saure Gruppe ausgewählt aus der Gruppe von -COOH, -SO₃H oder -PO₃H₂ umfasst.
wobei die Menge der Monomere (a) 0,1 bis 12 Gew.-% und die aller Monomere (b) zusammen 70 bis 99,5 Gew.-% bezüglich der Menge aller Monomere im Copolymer beträgt.

Als bevorzugt ist des Weiteren ein Copolymer anzusehen, bei dem es sich um ein Copolymer (A2) handelt, welches mindestens zwei verschiedene hydrophile Monomere (b) umfasst, und es sich dabei um mindestens
- 5 bis 50 Gew.-% mindestens eines neutralen hydrophilen Monomers (b1), und
- 25 bis 94,9 Gew.-% mindestens eines Sulfonsäuregruppen umfassenden, anionischen Monomers (b2) handelt,
wobei die Menge der Monomere (a) 0,1 bis 12 Gew.-%, und die aller Monomere (b) zusammen 70 bis 99,9 Gew.-% bezüglich der Menge aller Monomere im Copolymer beträgt.

### Komponente (c)

Verpflichtend werden die erfindungsgemäßen Copolymere in Gegenwart mindestens einer nicht-polymerisierbaren, oberflächenaktiven Verbindung hergestellt, bei der es sich vorzugsweise um mindestens ein nicht-ionisches Tensid handelt. Aber auch anionische und kationische Tenside sind geeignet, sofern sie an der Polymerisationsreaktion nicht teilnehmen.

Bei dem nicht-ionischen Tensid handelt es sich bevorzugt um einen ethoxylierten langkettigen, aliphatischen Alkohol, welcher optional aromatische Anteile enthalten kann.

Exemplarisch seinen genannt: C₁₂C₁₄-Fettalkoholethoxylate, C₁₆C₁₈-Fettalkoholethoxylate, C₁₃-Oxoalkoholethoxylate, C₁₀-Oxoalkoholethoxylate, C₁₃C₁₅-Oxoalkoholethoxylate, C₁₀-Guerbetalkoholethoxylate und Alkylphenolethoxylate.

Als geeignetes Tensid kommt insbesondere mindestens ein Vertreter in frage, der ausgewählt wird aus der Reihe der ethoxylierten Alkylphenole, der ethoxylierten, gesättigten iso-C13-Alkoholen und/oder der ethoxylierten C10-Guerbetalkoholen.

### Monomere (d)

Die erfindungsgemäßen Copolymere können in Spezialfällen neben den Monomeren (a) und (b) optional auch Monomere (d) umfassen, welche über zwei oder mehrere, bevorzugt zwei ethylenisch ungesättigte Gruppen verfügen. Hierdurch kann eine gewisse Vernetzung des Copolymers erreicht werden, sofern das in der vorgesehenen Anwendung des Copolymers keine unerwünschten negativen Auswirkungen hat. Ein zu hoher Vernetzungsgrad sollte aber auf jeden Fall vermieden werden; insbesondere darf die geforderte Wasserlöslichkeit des Copolymers nicht beeinträchtigt werden. Ob eine leichte Vernetzung im Einzelfalle sinnvoll sein kann, richtet sich nach der jeweiligen Anwendung des Copolymers.

Beispiele geeigneter Monomere (d) umfassen 1,4-Butandioldi(meth)acrylat , 1,6-Hexandioldi(meth)acrylat, 1,3-Butylenglykoldi(meth)acrylat , Neopentylglykoldi(meth)acrylat, Ethylenglykoldi(meth)acrylat , Diethylenglykoldi(meth)acrylat, Triethylenglykoldi(meth)acrylat oder Oligoethylenglykoldi(meth)acrylate wie bspw. Polyethylenglykol-bis(meth)acrylat, N,N' -Methylenbis(meth)acrylamid, Ethylenglykoldivinylether, Triethylenglykoldivinylether, Triallylamin, Triallylaminmethammoniumchlorid, Tetraallylammoniumchlorid oder Tris(2-hydroxy)isocyanurattri(meth)acrylat.

Besonders bevorzugt wird das Momomer (d) ausgewählt aus der Gruppe von Triallylamin, Triallylmethylammoniumchlorid, Tetraallylammoniumchlorid, N,N'-Methylenbisacrylamid, Triethylenglykolbismethacrylat, Triethylenglykolbisacrylat, Polyethylenglykol(400)-bismethacrylat und Polyethylenglykol(400)-bisacrylat.

Sofern überhaupt vorhanden, werden vernetzend wirkende Monomere (d) aber nur in geringen Mengen eingesetzt. Im Regelfalle sollte die Menge der Monomere (d) 1 Gew.-% bezüglich der Menge alle eingesetzten Monomere nicht überschreiten. Bevorzugt sollten nicht mehr als 0,5 Gew.-% und besonders bevorzugt nicht mehr als 0,1 Gew.-% eingesetzt werden. Art und Menge des Vernetzers werden vom Fachmann je nach der gewünschten Anwendung des Copolymers festgelegt.

### Herstellung der wasserlöslichen, hydrophob assoziierenden Copolymere

Die erfindungsgemäßen Copolymere können nach dem Fachmann prinzipiell bekannten Methoden durch radikalische Polymerisation der Monomere (a), (b) sowie optional (d) hergestellt werden, beispielsweise durch Lösungs- oder Gelpolymerisation in wässriger Phase, wobei allerdings jede der möglichen Polymerisationsvarianten verpflichtend in Gegenwart mindestens einer Komponente (c) durchgeführt werden muss.

In einer bevorzugten Ausführungsform wird die Herstellung mittels Gelpolymerisation in wässriger Phase vorgenommen. Zur Gelpolymerisation wird zunächst eine Mischung aus den Monomeren (a), (b) und ggf. (d), Initiatoren, dem Tensid (c) und sonstigen Hilfsstoffen mit Wasser bereitgestellt. Saure Monomere können vor der Polymerisation ganz oder teilweise neutralisiert werden. Bevorzugt ist ein pH-Wert von ca. 4 bis ca. 9. Die Konzentration aller Komponenten mit Ausnahme der Lösemittel beträgt üblicherweise ca. 20 bis 60 Gew.-%, bevorzugt ca. 30 bis 50 Gew.-%.

Es wird empfohlen, mindestens ein hydrophob assoziierendes Monomer (a) und mindestens ein hydrophiles Monomer (b) einer wässrigen Lösungspolymerisation in Gegenwart mindestens einer oberflächenaktiven Komponente (c) zu unterziehen, wobei vorzugsweise die Monomer-Komponente (a) vorgelegt und anschließend nacheinander die Monomer-Komponente (b) und die Komponente (c) zugesetzt werden. Außerdem kann optional der Monomer-Komponete (a) eine Mischung enthaltend die Monomer-Komponente (b) und die Komponente (c) zugesetzt werden. Von der Erfindung berücksichtigt wird aber auch, dass der Monomer-Komponete (a) die Komponente (c) zugesetzt und anschließend der erhaltenen Mischung die Monomer-Komponente (b) zugefügt wird. Die Polymerisation sollte insbesondere bei einem pH-Wert im Bereich von 5,0 bis 7,5 und vorzugsweise bei einem pH-Wert von 6,0 durchgeführt werden.

Entscheidend und somit erfindungswesentlich ist die Zugabe des Tensids (c) zur Reaktionslösung noch vor der Initiierung der Polymerisation, wobei die Zugabereihenfolge der Monomeren a) und b) sowie der Komponente c) - wie eben beschrieben - weitgehend frei gewählt werden kann.

Die Mischung wird anschließend fotochemisch und/oder thermisch polymerisiert, vorzugsweise bei -5 °C bis 50 °C. Sofern thermisch polymerisiert wird, setzt man bevorzugt Polymerisationsinitiatoren ein, die schon bei vergleichsweise niedriger Temperatur starten, wie beispielsweise Redoxinitiatoren. Die thermische Polymerisation kann schon bei Raumtemperatur oder durch Erwärmen der Mischung, bevorzugt auf Temperaturen von nicht mehr als 50°C vorgenommen werden. Die fotochemische Polymerisation wird üblicherweise bei Temperaturen von -5 bis 10 °C vorgenommen. Besonders vorteilhaft kann man fotochemische und thermische Polymerisation miteinander kombinieren, indem man der Mischung sowohl Initiatoren für die thermische als auch für die fotochemische Polymerisation zugibt. Die Polymerisation wird hierbei zunächst fotochemisch bei niedrigen Temperaturen, vorzugsweise -5 bis +10 °C gestartet. Durch die freiwerdende Reaktionswärme erwärmt sich die Mischung und hierdurch wird zusätzlich die thermische Polymerisation gestartet. Mittels dieser Kombination lässt sich ein Umsatz von mehr 99 % erreichen.

Die Gelpolymerisation erfolgt in aller Regel ohne Rühren. Sie kann batchweise erfolgen, indem man die Mischung in einem geeigneten Gefäß bei einer Schichtdicke von 2 bis 20 cm bestrahlt und/oder erwärmt. Durch die Polymerisation entsteht ein festes Gel. Die Polymerisation kann auch kontinuierlich erfolgen. Hierzu benutzt man eine Polymerisationsapparatur, welche ein Transportband zur Aufnahme der zu polymerisierenden Mischung verfügt. Das Transportband ist mit Einrichtungen zum Erwärmen oder zum Bestrahlen mit UV-Strahlung ausgestattet. Hiernach gießt man die Mischung mittels einer geeigneten Vorrichtung am einen Ende des Bandes auf, im Zuge des Transportes in Bandrichtung polymerisiert die Mischung und am anderen Ende des Bandes kann man das feste Gel abnehmen.

Das erhaltene Gel wird nach der Polymerisation vorzugsweise zerkleinert und getrocknet. Die Trocknung sollte bevorzugt bei Temperaturen unterhalb von 100 °C erfolgen. Zum Vermeiden des Zusammenklebens kann man für diesen Schritt ein geeignetes Trennmittel verwenden. Man erhält das hydrophob assoziierende Copolymer als Granulat oder Pulver.

Weitere Einzelheiten zur Durchführung einer Gelpolymerisation sind beispielsweise in DE 10 2004 032 304 A1, Abschnitte [0037] bis [0041] offenbart.

Die erfindungsgemäßen Copolymere besitzen vorzugsweise ein zahlenmittleres Molekulargewicht Mₙ von 50.000 bis 25.000.000 g/mol.

Da das erhaltene Polymerpulver bzw. -granulat im Zuge der Anwendung am Einsatzort in der Regel als wässrige Lösung eingesetzt wird, muss das Polymer vor Ort in Wasser aufgelöst werden. Dabei kann es mit den beschriebenen, hochmolekularen Polymeren zu unerwünschten Verklumpungen kommen. Um dies zu vermeiden, kann den erfindungsgemäßen Polymeren bereits bei der Synthese ein Hilfsmittel, welches die Auflösung des getrockneten Polymers in Wasser beschleunigt bzw. verbessert, zugesetzt werden. Bei diesem Hilfsmittel kann es sich beispielsweise um Harnstoff handeln.

### Verwendung der wasserlöslichen, hydrophob assoziierenden Copolymere

Die erfindungsgemäßen, hydrophob assoziierenden Copolymere können zur Verdickung wässriger Phasen eingesetzt werden.

Die Einsatzkonzentration wird vom Fachmann je nach der Art der zu verdickenden wässrigen Phase sowie der Art des Copolymers festgelegt. Im Regelfalle beträgt die Konzentration des Copolymers 0,1 bis 5 Gew.-% bezüglich der wässrigen Phase, bevorzugt 0,5 bis 3 Gew.-% und besonders bevorzugt 1 bis 2 Gew.-%.

Die Copolymere können hierbei alleine eingesetzt werden, oder auch in Kombination mit anderen verdickenden Komponenten, beispielsweise anderen verdickenden Polymeren zusammen. Sie können weiterhin beispielsweise gemeinsam mit Tensiden zu einem verdickenden System formuliert werden. Die Tenside können in wässriger Lösung Mizellen bilden und die hydrophob assoziierenden Copolymere können gemeinsam mit den Mizellen ein dreidimensionales, verdickend wirkendes Netzwerk bilden.

Zum Einsatz kann man das Copolymer direkt in der zu verdickenden wässrigen Phase lösen. Denkbar ist es auch, das Copolymer vorzulösen und dann die gebildete Lösung dem zu verdickenden System zuzugeben.

Bei den zu verdickenden wässrigen Phasen kann es sich vorzugsweise um bauchemische Systeme wie z.B. um Baustoffsysteme auf Basis hydraulischer Bindemittel wie Zement, Kalk, Gips und Anhydrit sowie wasserbasierende Anstrich- und Beschichtungssystemen, Formulierungen für die Erdölförderung, wie beispielsweise Bohrspülungen, Formulierungen zum Acidizing oder Fracturing, oder Formulierungen für die tertiäre Erdölförderung handeln.

In diesem Zusammenhang sieht die vorliegende Erfindung als bevorzugte Verwendung der Copolymere deren Einsatz als verdickend wirkendes, rheologisches Additiv für wasserbasierte Systeme, vorzugsweise für Lösungen vor, und insbesondere bei der Erschließung, Ausbeutung und Komplettierung unterirdischer Erdöl- und Erdgaslagerstätten. Wird das erfindungsgemäße Copolymer zur tertiären Erdölförderung benutzt, wird bevorzugt eine wässrige Formulierung der besagten Copolymere in einer Konzentration von 0,01 bis 5 Gew.-% durch mindestens eine Injektionsbohrung in eine Erdöllagerstätte einpresst und der Lagerstätte durch mindestens eine Produktionsbohrung Rohöl entnommen.

Erfindungsgemäß kann das Copolymer aber auch als rheologisches Additiv für wässrige Baustoffsysteme Verwendung finden, die hydraulische Bindemittelsysteme enthalten, wobei dann das Copolymer bevorzugt als Granulat oder Pulver vorliegen sollte.

Bei den zu verdickenden wässrigen Phasen kann es sich aber auch beispielsweise um flüssige Wasch- und Reinigungsmittelformulierungen, wie beispielsweise Waschmittel, Waschhilfsmittel wie bspw. Pre-Spotter, Weichspüler, kosmetische Formulierungen, pharmazeutische Formulierungen, Nahrungsmittel, Streichmassen, Formulierungen für die Textilherstellung, Textildruckpasten, Druckfarben, Druckpasten für den Textildruck, Anstrichfarben, Pigmentslurries, wässrige Formulierungen zur Schaumerzeugung, enteisende Mischungen, beispielsweise für Flugzeuge, und allg. um Formulierungen für die Bauindustrie handeln.

Die folgenden Beispiele sollen die Erfindung näher erläutern:

### Beispiele:

### 1. Herstellungsverfahren

### 1.1 Herstellungsbeispiel 1 (Vergleich): ohne Tensid-Zugabe während der Polymerisation

In einem 3L-Gefäß mit Rührer und Thermometer wurden 242,5 g einer 50 % Na-AMPS-Lsg. (AMPS 2405, Fa. Lubrizol) vorgelegt. Unter Rühren wurden 295,8 g Wasser zugegeben. Anschließend wurden nacheinander 1,2 g Surfynol DF 58 und 0,4 g Baysilone EN (Fa. Bayer) als Entschäumer zugegeben. Nach Zugabe von 4,6 g Pluriol A1190V+12PeO (Entwicklungsprodukt der Fa. BASF bestehend aus Hydroxybutylvinylether mit 25 Ethylenoxideinheiten und 12 Pentenoxideinheiten) wurden 228,8 g einer 50 %igen Acrylamid-Lsg. (Fa. Cytec) zugegeben. Nach Zugabe von 2,4g einer 5 %igen Versenex-Lsg. zur Entstabilisierung der Acrylamid-Lsg. wurde der pH-Wert mit einer 20 % NaOH-Lsg. und/oder 20 %igen H₂SO₄-Lsg. auf 6,0 eingestellt. Während der Inertisierung durch 30 minütige Spülung mit Stickstoff wurde die Lösung auf ca. 10 °C abgekühlt. Anschließend wurde die Lösung in einen Plastikbehälter mit den Maßen (b*t*h) 15cm*10cm*20cm umgefüllt und nacheinander wurden 16,0 g (200 ppm) 10 %iger 2,2'-Azo-bis-(2-amidinopropan)-dihydrochlorid, 0,5g (10ppm) 1 %iger Bisulfitlösung, 8g (6ppm) 0,1 %iger tert-Butylhydro-peroxidlösung und 4,0 g (5 ppm) 1 %iger Eisen(II)sulfatlösung zugesetzt.

Die Polymerisation wurde durch Bestrahlen mit UV-Licht (zwei Philips Röhren; Cleo Performance 40 W) gestartet. Nach ca. 2 - 3 h wurde das schnittfeste Gel aus dem Plastikbehälter genommen und mit einer Schere in ca. 5 cm * 5 cm * 5 cm große Gelwürfel geschnitten. Bevor die Gelwürfel mittels eines herkömmlichen Fleischwolfs zerkleinert wurden, wurden Sie mit dem Trennmittel Sitren 595 (PolydimethylsiloxanEmulsion; Firma Goldschmidt) eingestrichen. Bei dem Trennmittel handelt es sich um eine Polydimethylsiloxanemulsion, die 1 : 20 mit Wasser verdünnt wurde.

Das erhaltene Gelgranulat wurde anschließend gleichmäßig auf Trockengitter verteilt und in einem Umlufttrockenschrank bei ca. 90 - 120 °C im Vakuum bis zur Gewichtskonstanz getrocknet. Es wurden ca. 500 g eines weißen, harten Granulats erhalten, welches mit Hilfe einer Zentrifugalmühle in einen pulverigen Zustand überführt wurde.

### 1.2 Herstellungsbeispiele 2 - 4 (erfindungsgemäß): mit Tensid-Zugabe während der Gelpolymerisation

Zusätzlich zur Monomerlösung wie unter Vergleichsbeispiel 2 beschrieben wurde als Tensid Lutensol TO15 (Fa. BASF, C13-Oxoalkoholethoxylat + 15 Ethylenoxideinheiten) in folgenden Mengen in der Monomerlösung vor der Polymerisation aufgelöst:
Herstellungsbsp. 2: 1 % Lutensol TO15 entspricht 2,4 g
Herstellungsbsp. 3: 2 % Lutensol TO15 entspricht 4,8 g
Herstellungsbsp. 4: 3 % Lutensol TO15 entspricht 7,2 g

### 1.3 Herstellungsbeispiele 5 - 10 (erfindungsgemäß)

Ausgehend von Herstellungsbsp. 3 wurden die folgenden Polymere mit alternativen Tensiden zu Lutensol TO 15 gefertigt (Messung der Viskosität wie in Anwendungsbsp. 1 beschrieben):

| | Tensid | Viskosität [mPas] |
|---|---|---|
| Herstellungsbsp. 3 | 2 % Lutensol TO 15 (C13-Oxoalkoholethoxylat + 15 EO) | 230 |
| Herstellungsbsp. 5 | 2 % Lutensol AP 10 (Alkylphenol + 10 EO) | 390 |
| Herstellungsbsp. 6 | 2 % Lutensol XL100 (C10-Guerbetalkohol+10 EO) | 140 |
| Herstellungsbsp. 7 | 2 % Lutensol XP100 (C10-Guerbetalkohol+10 EO) | 80 |
| Herstellungsbsp. 8 | 2 % Natriumdodecylsulfonat (SDS) | 100 |
| Herstellungsbsp. 9 | 2 % Dodecyltrimethylammoniumchlorid | 150 |
| Herstellungsbsp. 10 | 2 % Lutensol TO 10 (C13-Oxoalkoholethoxylat + 10 EO) | 270 |

Wie an den Daten zu erkennen ist, kann nicht nur das Lutensol TO 15 sondern auch andere nichtionische Tenside, sowie anionische und kationische Tenside bei der Synthese der erfindungsgemäßen Copolymere eingesetzt werden.

### 1.4 Herstellungsbeispiel 11 (erfindungsgemäß)

In Analogie zu dem Herstellungsbeispiel 3 wurde ein Copolymer mit einem alternativen wasserlöslichen, hydrophob assoziierenden Monomer zu Pluriol A1190V+12PeO gefertigt. Dieses Monomer besteht aus einem mit 7 EO ethoxyliertem C12-Alkohol, welcher anschließend mit Methacrylsäureanhydrid umgesetzt wurde (Genagen LA070MA der Firma Clariant). Die eingesetzte Masse des Genagens entspricht derjenigen des Pluriols A1190V+12PeO in Herstellungsbsp. 3.
Die Messung der Viskosität wie in Anwendungsbsp. 1 beschrieben ergab einen Wert von 780 mPas.

Dieses Herstellungsbeispiel zeigt, dass verschiedene wasserlösliche, hydrophob assoziierende Monomere eingesetzt werden können.

### 1.5 Herstellungsbeispiel 12 (erfindungsgemäß)

In Analogie zu Herstellungsbeispiel 3 wurde ein gemischt ionisches Copolymer gefertigt. Dieses Copolymer enthält zusätzlich zu AMPS, Acrylamid und Pluriol A1190V+12PeO das kationische Monomer
3-Trimethylammoniumpropylmethacrylamidchlorid (DIMAPAQUAT). Das molare Verhältnis der Monomere beträgt AMPS:Acrylamid:DIMAPAQUAT:Pluriol A1190V+12PeO = 30:37:32:1.
Die Messung der Viskosität, wie in Anwendungsbsp. 1 beschrieben, ergab einen Wert von 56 mPas.

### 1.6 Herstellungsbeispiel 13 (erfindungsgemäß)

In Analogie zu Herstellungsbeispiel 3 wurde ein Copolymer, welches statt 4,6g Pluriol A1190V+12PeO die gleiche molare Menge Pluriol A1190V+16PeO (Entwicklungsprodukt der Fa. BASF bestehend aus Hydroxybutylvinylether mit 25 Ethylenoxideinheiten und 16 Pentenoxideinheiten) enthält, gefertigt.
Die Messung der Viskosität, wie in Anwendungsbsp. 1 beschrieben, ergab einen Wert von 77 mPas.

### 1.7 Herstellungsbeispiel 14 (erfindungsgemäß)

In Analogie zu Herstellungsbeispiel 3 wurde ein Copolymer, welches statt Na-AMPS das Natriumsalz der Acrylsäure enthält, gefertigt.
Die Messung der Viskosität, wie in Anwendungsbsp. 1 beschrieben, ergab einen Wert von 89 mPas.

### 1.8 Herstellungsbeispiel 15 (erfindungsgemäß)

In Analogie zu Herstellungsbeispiel 3 wurde ein Copolymer, in welchem die Hälfte des Na-AMPS durch das Natriumsalz der Acrylsäure ersetzt wurde, gefertigt.
Die Messung der Viskosität, wie in Anwendungsbsp. 1 beschrieben, ergab einen Wert von 120 mPas.

### 2. Anwendungsbeispiele:

### 2.1

Die Polymere der Herstellungsbeispiele 1 - 4 wurden in synthetischem Meerwasser nach DIN 50900 (Salzgehalt 35 g/l) gelöst, so dass eine Polymerkonzentration von 4000 ppm erreicht wurde. Von diesen Lösungen wurde die Viskosität an einem Haake-Rheometer mit einer Doppelspaltgeometrie bei 7s⁻¹ und 60 °C gemessen.

| Polymer | Viskosität [mPa*s] |
|---|---|
| Herstellungsbsp. 1 | 24 |
| Herstellungsbsp. 2 | 360 |
| Herstellungsbsp. 3 | 230 |
| Herstellungsbsp. 4 | 80 |

Man sieht deutlich, dass durch die Zugabe des Lutensol TO 15 während der Polymerisation die Viskosität der Polymere deutlich gesteigert werden kann. Des Weiteren hat die zugegebene Menge an Tensid einen deutlichen Einfluss auf die Viskosität.

### 2.2

Um zu zeigen, dass es sich bei den erfindungsgemäßen Polymeren nicht nur um eine physikalische Mischung aus dem Polymer von Herstellungsbsp. 1 und dem Tensid handelt, sondern dass das die Polymerstruktur während der Polymerisationsreaktion entscheidend beeinflusst wird, wurden auch die Viskositäten von Mischungen des Polymers aus Herstellungsbsp. 1 mit dem Tensid Lutensol TO 15 gemessen:

| | Viskosität [mPas] | Viskosität der Mischung von Herstellungsbsp. 1 mit der entsprechenden Menge an Lutensol TO 15 [mPas] |
|---|---|---|
| Herstellungsbsp. 2 | 360 | 25 |
| Herstellungsbsp. 3 | 230 | 26 |
| Herstellungsbsp. 4 | 80 | 20 |

Wie an diesen Messungen zu erkennen ist, hat eine nachträgliche Zugabe des Tensids keinen positiven Einfluss auf die Viskosität des Polymers.

Zur detaillierteren Untersuchung des Wirkmechanismus wurde das Polymer aus Herstellungsbeispiel 3 über einen Zeitraum von 48 h mit Toluol im Soxhlet refluxiert.

Dabei wurden 90% des ursprünglich enthaltenen Lutensol TO 15 aus dem Copolymer extrahiert. Die hohe Viskosität des Polymers blieb aber auch nach der nahezu vollständigen Extraktion des Tensids erhalten.

Dies deutet darauf hin, dass das Tensid nicht kovalent in das Copolymer eingebaut bzw. gepfropft wird, sondern dass der Tensidzusatz den Aufbau der Polymerstruktur positiv beeinflusst. Dies könnte man sich so vorstellen, dass das Tensid mit dem hydrophob assoziierenden Monomer gemischte Mizellen bildet.

### 2.3

1 g des jeweiligen Copolymers der Herstellungsbeispiele 1 - 4 wurde in 249 g synthetischem Meerwasser nach DIN 50900 (Salzgehalt 35 g/l) 24 h lang bis zum vollständigen Lösen gerührt. Anschließend wurde die Lösung über ein Sieb mit der Maschenweite 200 µm filtriert und das Volumen des auf dem Sieb verbleibenden Rückstands gemessen. Der erhaltene Wert entspricht dem Gelanteil.

| Polymer | Gelanteil [ml] |
|---|---|
| Herstellungsbsp. 1 (Vergleich) | 45 |
| Herstellungsbsp. 2 (Erfindung) | 9 |
| Herstellungsbsp. 3 (Erfindung) | 5 |
| Herstellungsbsp. 4 (Erfindung) | < 1 |

Wie an den Daten zu erkennen ist, verringert sich der Gelanteil durch die Tensidzugabe deutlich. Mit steigender Tensidmenge lässt sich der Gelanteil bis unter die Nachweisgrenze reduzieren.

## Patentansprüche

1. Wasserlösliches, hydrophob assoziierendes Copolymer umfassend
(a) mindestens ein monoethylenisch ungesättigtes, wasserlösliches, oberflächenaktives Monomer (a), sowie
(b) mindestens ein von Monomer (a) verschiedenes, monoethylenisch ungesättigtes, hydrophiles Monomer (b),
**dadurch gekennzeichnet, dass** bei seiner Synthese vor der Initiierung der Polymerisationsreaktion als weitere Komponente (c) mindestens eine weitere, aber nicht-polymerisierbare oberflächenaktive Verbindung eingesetzt wurde.

2. Copolymer gemäß Anspruch 1, **dadurch gekennzeichnet, dass** es sich bei dem Monomer (a) um mindestens eine Verbindung der allgemeinen Formel (I)
H₂C=C(R¹)-R⁴-O-(-CH₂-CH₂-O-)ₖ-(-CH₂-CH(R³)-O-)_{I}-H (I)
oder
H₂C=C(R¹)-O-(-CH₂-CH₂-O-)ₖ-R² (II)
oder
H₂C=C(R¹)-(C=O)-O-(-CH₂-CH₂-O-)ₖ-R² (III)
handelt, wobei die Einheiten -(-CH₂-CH₂-O-)ₖ und -(-CH₂-CH(R³)-O-)_{I} in Blockstruktur in der in Formel (I) dargestellten Reihenfolge angeordnet sind und die Reste und Indices die folgende Bedeutung haben:
k: eine Zahl von 6 bis 150,
l: eine Zahl von 5 bis 25,
R¹: H oder Methyl,
R²: ein aliphatischer und/oder aromatischer, geradkettiger oder verzweigter Kohlenwasserstoffrest mit 8 bis 40 Kohlenstoffatomen,
R³: unabhängig voneinander ein Kohlenwasserstoffrest mit mindestens 2 Kohlenstoffatomen,
R⁴: eine Einfachbindung oder eine zweiwertige, verknüpfende Gruppe, ausgewählt aus der Gruppe von -(CₙH₂ₙ)- [R^{4a}], -O-(C_{n'} H_{2n'} )- [R^{4b}] und -C(O)-O-(C_{n' '} H_{2n' '} )- [R^{4c}], wobei n, n' und n' ' jeweils für eine natürliche Zahl von 1 bis 6 steht.

3. Copolymer nach einem der Ansprüche 1 oder 2, **dadurch gekennzeichnet, dass** es als Komponente (c) nichtionische Tenside enthält.

4. Copolymer nach einem der Ansprüche 1 bis 3, **dadurch gekennzeichnet, dass** es die Monomer-Komponente (a) in Mengen von 0,1 bis 20,0 Gew.-%, die Monomer-Komponente (b) in Mengen von 25,0 bis 99,9 Gew.-% und die Komponente (c) in Mengen von 0,1 bis 5,0 Gew.-%, jeweils bezogen auf die Gesamtmenge aller Komponenten im Copolymer, enthält.

5. Copolymer nach einem der Ansprüche 1 bis 4, **dadurch gekennzeichnet, dass** es sich bei R³ um einen Kohlenwasserstoffrest mit mindestens 3 Kohlenstoffatomen handelt.

6. Copolymer nach einem der Ansprüche 1 bis 5, **dadurch gekennzeichnet, dass** es sich bei R¹ um H und bei R⁴ um eine Gruppe ausgewählt aus -CH₂- oder -O-CH₂-CH₂-CH₂-CH₂- handelt.

7. Copolymer nach einem der Ansprüche 1 bis 6, **dadurch gekennzeichnet, dass** es sich bei mindestens einem der Monomere (b) um ein saure Gruppen umfassendes Monomer handelt.

8. Copolymer nach Anspruch 7, **dadurch gekennzeichnet, dass** es sich bei den sauren Gruppen um mindestens eine Gruppe ausgewählt aus der Gruppe von -COOH, -SO₃H und -PO₃H₂ handelt.

9. Copolymer nach einem der Ansprüche 1 bis 6, **dadurch gekennzeichnet, dass** es sich um ein Copolymer (A1) handelt, welches mindestens zwei verschiedene hydrophile Monomere (b) umfasst, und es sich dabei um mindestens
• ein neutrales hydrophiles Monomer (b1), und
• mindestens ein hydrophiles anionisches Monomer (b2) handelt, welches mindestens eine saure Gruppe ausgewählt aus der Gruppe von -COOH, -SO₃H oder -PO₃H₂ umfasst.
wobei die Menge der Monomere (a) 0,1 bis 5 Gew.-% und die aller Monomere (b) zusammen 70 bis 99,5 Gew.-% bezüglich der Menge aller Monomere im Copolymer beträgt.

10. Copolymer nach Anspruch 9, **dadurch gekennzeichnet, dass** es sich bei dem neutralen Monomer (b1) um ein Monomer ausgewählt aus der Gruppe von (Meth)acrylamid, N-Methyl(meth)acrylamid, N,N' -Dimethyl(meth)acrylamid, N-Methylol(meth)acrylamid, N-Vinylformamid oder N-Vinyl-2-pyrrolidon handelt, und bei dem Monomer (b2) um mindestens eines ausgewählt aus der Gruppe von (Meth)acrylsäure, Vinylsulfonsäure, Allylsulfonsäure, 2-Acrylamido-2-methylpropansulfonsäure (AMPS), 2-Methacrylamido-2-methylpropansulfonsäure, 2-Acrylamidobutansulfonsäure, 3-Acrylamido-3-methyl-butansulfonsäure oder 2-Acrylamido-2,4,4-trimethylpentansulfonsäure oder Vinylphosphonsäure.

11. Copolymer nach einem der Ansprüche 9 oder 10, **dadurch gekennzeichnet, dass** das Copolymer darüber hinaus noch mindestens ein kationisches, Ammoniumgruppen aufweisendes Monomer (b3) umfasst.

12. Copolymer nach Anspruch 11, **dadurch gekennzeichnet dass** es sich bei dem kationischen Monomer um Salze von 3-Trimethylammoniumpropyl(meth)acrylamiden und 2-Trimethylammoniumethyl(meth)acrylaten handelt.

13. Copolymer nach einem der Ansprüche 1 bis 8, **dadurch gekennzeichnet, dass** es sich um ein Copolymer (A2) handelt, welches mindestens zwei verschiedene hydrophile Monomere (b) umfasst, und es sich dabei um mindestens
• ein neutrales hydrophiles Monomer (b1), und
• mindestens ein kationisches Monomer (b3) handelt,
wobei die Menge der Monomere (a) 0,1 bis 12 Gew.-% und die aller Monomere (b) zusammen 70 bis 99,9 Gew.-% bezüglich der Menge aller Monomere im Copolymer beträgt.

14. Copolymer nach einem der Ansprüche 1 bis 8, **dadurch gekennzeichnet, dass** es sich um ein Copolymer (A2) handelt, welches mindestens zwei verschiedene hydrophile Monomere (b) umfasst, und es sich dabei um mindestens
• 5 bis 50 Gew.-% mindestens eines neutralen hydrophilen Monomers (b1), und
• 25 bis 94,9 Gew.-% mindestens eines Sulfonsäuregruppen umfassenden, anionischen Monomers (b2) handelt,
wobei die Menge der Monomere (a) 0,1 bis 12 Gew.-%, und die aller Monomere (b) zusammen 70 bis 99,9 Gew.-% bezüglich der Menge aller Monomere im Copolymer beträgt.

15. Copolymer nach einem der Ansprüche 1 bis 14, **dadurch gekennzeichnet, dass** das Copolymer noch bis zu 1 Gew. % eines vernetzenden, mindestens zwei ethylenisch ungesättigte Gruppen umfassenden Monomers (d) umfasst, wobei es sich bei Monomer (d) um mindestens eines ausgewählt wird aus der Gruppe von Triallylamin, Triallylmethylammoniumchlorid, Tetraallylammoniumchlorid, N,N'-Methylenbisacrylamid, Triethylenglykolbismethacrylat, Triethylenglykolbisacrylat, Polyethylenglykol(400)-bismethacrylat und Polyethylenglykol(400)-bisacrylat handelt.

16. Verfahren zur Herstellung des Copolymers nach einem der Ansprüche 1 bis 15, **dadurch gekennzeichnet, dass** mindestens ein hydrophob assoziierendes Monomer (a) und mindestens ein hydrophiles Monomer (b) einer wässrigen Lösungspolymerisation in Gegenwart mindestens einer oberflächenaktiven Komponente (c) unterzogen werden.

17. Verfahren nach Anspruch 16, **dadurch gekennzeichnet, dass** die Monomer-Komponente (a) vorgelegt und anschließend nacheinander die Monomer-Komponente (b) und die Komponente (c) zugesetzt werden.

18. Verfahren nach Anspruch 16, **dadurch gekennzeichnet, dass** der Monomer-Komponete (a) eine Mischung enthaltend die Monomer-Komponente (b) und die Komponente (c) zugesetzt wird.

19. Verfahren nach Anspruch 16, **dadurch gekennzeichnet, dass** der Monomer-Komponete (a) die Komponente (c) zugesetzt und anschließend der erhaltenen Mischung die Monomer-Komponente (b) zugefügt wird.

20. Verfahren nach einem der Ansprüche 16 bis 19, **dadurch gekennzeichnet, dass** die Polymerisation bei einem pH-Wert im Bereich von 5,0 bis 7,5 und vorzugsweise bei einem pH-Wert von 6,0 durchgeführt wird.

21. Verfahren nach einem der Ansprüche 16 bis 20, **dadurch gekennzeichnet, dass** die Polymerisation durch Einwirkung von Licht im Bereich der Wellenlänge von 100 bis 400 nm und vorzugsweise von 250 bis 350 nm, gestartet wird.

22. Verfahren nach einem der Ansprüche 16 bis 21, **dadurch gekennzeichnet, dass** das erhaltene Polymerisationsprodukt, vorzugsweise in Form eines Gels, zerkleinert und abschließend getrocknet wird.

23. Verwendung von Copolymeren nach einem der Ansprüche 1 bis 15 und/oder 16 bis 22 als verdickend wirkendes, rheologisches Additiv für wasserbasierte Systeme, vorzugsweise Lösungen.

24. Verwendung von Copolymeren nach Anspruch 23 bei der Erschließung, Ausbeutung und Komplettierung unterirdischer Erdöl- und Erdgaslagerstätten.

25. Verwendung von Copolymeren nach einem der Ansprüche 23 oder 24 zur tertiären Erdölförderung, indem man eine wässrige Formulierung der besagten Copolymere in einer Konzentration von 0,01 bis 5 Gew.-% durch mindestens eine Injektionsbohrung in eine Erdöllagerstätte einpresst und der Lagerstätte durch mindestens eine Produktionsbohrung Rohöl entnimmt.

26. Verwendung nach Anspruch 25, **dadurch gekennzeichnet, dass** die wässrige Formulierung zusätzlich mindestens ein Tensid umfasst.

27. Verwendung von Copolymeren nach einem der Ansprüche 1 bis 15 und/oder 16 bis 22 als rheologisches Additiv für wässrige Baustoffsysteme, die hydraulische Bindemittelsysteme enthalten.

28. Verwendung nach Anspruch 27 als Granulat oder Pulver.
